# EUROPÄISCHE PATENTSCHRIFT

(11) **EP 3 399 336 B1**
(45) Veröffentlichungstag und Bekanntmachung des Hinweises auf die Patenterteilung: **16.03.2022**
(21) Anmeldenummer: 17169615.6
(22) Anmeldetag: 05.05.2017
(51) Int. Cl.: G01S 17/06, G01S 17/42, G01S 17/50, G01S 17/89

(54) **POSITIONIERVORRICHTUNG**
POSITIONING DEVICE
DISPOSITIF DE POSITIONNEMENT

(43) Veröffentlichungstag der Anmeldung: 07.11.2018
(73) Patentinhaber: Leuze electronic GmbH + Co. KG, 73277 Owen/Teck (DE)
(72) Erfinder: Hubert, Jörg, 85244 Röhrmoos (DE); Linsenmayer, Jörg, 73272 Neidlingen (DE); Köbel, Herbert, 73277 Owen (DE); Wolf, Tilo, 73240 Wendlingen (DE); Kirchner, Markus, 72636 Frickenhausen (DE); Heckmayr, Alexander, 86807 Buchloe (DE); Kaul, Martin, 73104 Börtlingen (DE); Pfeffer, Wolfgang, 73111 Lauterstein (DE); Feller, Bernhard, 86316 Friedberg (DE); Sanzi Dr., Friedrich, 73230 Kirchheim/Teck (DE)
(74) Vertreter: Ruckh, Rainer Gerhard

(56) Entgegenhaltungen:
- EP-A2- 0 290 140
- EP-A2- 1 345 031
- DE-A1-102005 047 658
- DE-A1-102012 105 645
- US-A- 4 901 073

## Beschreibung

Die Erfindung betrifft eine Vorrichtung gemäß dem Oberbegriff des Anspruchs 1.

Eine derartige Vorrichtung ist aus der DE 102 11 779 B4 bekannt. Die dort beschriebene Vorrichtung weist einen optischen Sensor mit einem Sendelichtstrahlen emittierenden Sender, einem Empfangslichtstrahlen empfangenden Empfänger, Mitteln zur Führung der Sendelichtstrahlen innerhalb eines Abtastbereichs und einer Auswerteeinheit zur Auswertung der am Ausgang des Empfängers anstehenden Empfangssignale auf. Mit dem optischen Sensor erfolgt die Erfassung von Marken, welche ein Positionsmaßsystem bilden. Durch die Erfassung von Marken des Positionsmaßsystems zu zwei unterschiedlichen Zeitpunkten wird zudem die Geschwindigkeit des optischen Sensors relativ zum Positionsmaßsystem bestimmt.

Der optische Sensor ist besonders vorteilhaft an einem Fahrzeug angebracht, wobei das Positionsmaßsystem stationär an der Fahrbahn angeordnet ist, entlang derer das Fahrzeug bewegt wird. Prinzipiell kann auch ein Positionsmaßsystem bezüglich einer stationär angeordneten optoelektronischen Vorrichtung bewegt werden. Durch die fortlaufende Erfassung der Marken des Positionsmaßsystems werden in dem optischen Sensor kontinuierlich die aktuellen Geschwindigkeits- und Positionsmesswerte ermittelt und an die Steuerung des Fahrzeuges übermittelt. In der Steuerung können diese Messwerte ohne weitere Auswertung und insbesondere ohne jeden Synchronisationsaufwand direkt zur Steuerung des Fahrzeugs verwendet werden. Insbesondere kann in der Steuerung die Einhaltung von vorgegebenen Geschwindigkeitsprofilen für das Fahrzeug fortlaufend kontrolliert werden. Zusammen mit den aktuellen Informationen über die Position des Fahrzeugs kann dieses reproduzierbar und punktgenau auf vorgegebene Sollpositionen eingefahren werden.

Eine Weiterbildung dieser Vorrichtung, die für einen Einsatz in sicherheitstechnischen Anwendungen geeignet ist, ist aus der DE 10 2005 047 658 B4 bekannt.

Diese Vorrichtung umfasst ein von einer Anordnung von Marken gebildetes Positionsmaßsystem sowie einen optischen Sensor zur Erfassung der Marken des Positionsmaßsystems. Der optische Sensor und das Positionsmaßsystem sind relativ zueinander beweglich angeordnet. In jeder Marke ist deren Absolutposition innerhalb des Positionsmaßsystems als Kodierung enthalten. Dem optischen Sensor ist zur Ausbildung eines zweikanaligen, diversitären Sensorsystems ein Sensorelement fest zugeordnet. Mittels dessen sind die Marken des Positionsmaßsystems oder Markierungen eines dem Positionsmaßsystem fest zugeordneten inkrementellen Maßsystems erfassbar. Die vom optischen Sensor und vom Sensorelement generierten Signale werden in einem redundant aufgebauten Auswertesystem miteinander verglichen, wodurch Fehler im optischen Sensor oder im Sensorelement aufgedeckt werden können. Die Signale des optischen Sensors und des Sensorelements sind einer dem Auswertesystem vorgeordneten Anschalteinheit zur Generierung sicherer Ausgangssignale zugeführt.

Durch das diversitär ausgebildete zweikanalige Sensorsystem und das redundant aufgebaute Auswertesystem ist zwar eine fehlersichere Erfassung der Marken des Positionsmaßsystems möglich, so dass die Vorrichtung in sicherheitstechnischen Applikationen eingesetzt werden kann. Jedoch weist diese Vorrichtung einen konstruktiv aufwändigen Aufbau auf.

Die US 4,901,073 betrifft einen Barcode-Scanner mittels dessen Codes erfasst werden, die in einer Reihenanordnung angeordnet sind, wobei deren Positionen in diesen Codes kodiert sind. Der Barcode-Scanner und das so gebildete Positionsmaßsystem sind beweglich zueinander angeordnet. Durch Lesen der Codes mittels des Barcode-Scanners kann dessen Position erfasst werden. Die Kodierungen der Barcodes enthalten Prüfbits. Durch Erfassen der Prüfbits kann festgestellt werden, ob ein Code richtig gelesen wurde oder nicht.

Die DE 10 2005 047 658 A1 betrifft eine Vorrichtung mit einem von einer Anordnung von Marken gebildeten Positionsmaßsystem und mit einem optischen Sensor zur Erfassung der Marken des Positionsmaßsystems. Der optische Sensor und das Positionsmaßsystem sind relativ zueinander beweglich angeordnet. Dem optischen Sensor ist ein Sensorelement fest zugeordnet, mittels dessen die Marken des Positionsmaßsystems oder Markierungen eines dem Positionsmaßsystem fest zugeordneten Maßsystems erfassbar ist. Die vom optischen Sensor und vom Sensorelement generierten Signale werden in einem Auswertesystem ausgewertet.

Die EP 0 290 140 A2 betrifft eine Überwachungsvorrichtung mittels derer kodierte Marken gelesen werden. Die Marken sind an einer Nivellierstange angebracht. Durch Erfassen der Marken kann das aktuelle Höhenniveau abgelesen werden, da die Marken entsprechende Höhenwerte kodieren.

Die EP 1 345 031 A2 betrifft eine optoelektronische Vorrichtung zur Erfassung von Marken und weist einen Sendelichtstrahlen emittierenden Sender, einen Empfangslichtstrahlen empfangenden Empfänger, Mittel zur Führung der Sendelichtstrahlen innerhalb eines Abtastbereichs und eine Auswerteeinheit zur Auswertung der am Ausgang des Empfängers anstehenden Empfangssignale sind vorgesehen. Die zu erfassenden Marken bilden ein Positionsmaßsystem. Durch Erfassung von Marken des Positionsmaßsystems zu zwei unterschiedlichen Zeitpunkten wird in der Auswerteeinheit aus der innerhalb des Zeitintervalls registrierten Positionsänderung der optoelektronischen Vorrichtung relativ zum Positionsmaßsystem die Geschwindigkeit der optoelektronischen Vorrichtung relativ zum Positionsmaßsystem bestimmt.

Die DE 10 2012 105 645 A1 betrifft ein Verfahren zur optischen Erfassung eines codierten Merkmals auf einem Informationsträger, insbesondere einem Plakat, zur Erlangung von Zusatzinformationen durch das erfassbare codierte Merkmal, umfassend die Schritte:
- Erfassen des optisch erfassbaren Merkmals, durch digitales Endgerät mit Internetzugang und Kamera;
- dekodieren des optisch erfassbaren Merkmals in einen Zeichen- und/oder Zahlen-Code;
- auf der Basis des Codes wird eine URL bestimmt, die durch das digitale Endgerät aufgerufen wird, um die Zusatzinformationen anzuzeigen.

Der Erfindung liegt die Aufgabe zugrunde, eine Vorrichtung der eingangs genannten Art so auszubilden, dass mit geringem konstruktivem Aufwand eine fehlersichere Erfassung von Positionsinformationen ermöglicht wird.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Vorrichtung mit einem von einer Anordnung von Marken gebildeten Positionsmaßsystem und mit einem optischen Sensor zur Erfassung der Marken des Positionsmaßsystems. Der optische Sensor und das Positionsmaßsystem sind relativ zueinander beweglich angeordnet. In jeder Marke sind Positionsinformationen und eine Prüfsumme kodiert. In einer Auswerteeinheit des optischen Sensors sind die Positionsinformationen und die Prüfsumme ausgewertet. Anhand der Prüfsumme ist eine Fehlerkontrolle durchgeführt. Der gesamte optische Sensor weist einen einkanaligen Aufbau auf. Die Funktion der Auswerteeinheit ist dadurch überprüft, in dem Fehler in der Auswerteeinheit dadurch aufgedeckt sind, dass die Prüfsumme einer Marke nicht erkannt wird. In der Auswerteeinheit ist bei Erfassen von Fehlern in den Positionsinformationen der Marken und/oder Fehlern in der Auswerteeinheit ein Fehlersignal generiert. Das Fehlersignal wird an eine externe Einheit ausgegeben. Mit dieser Einheit können geeignete Gegenmaßnahmen zur Fehlerbehebung eingeleitet werden.

Der Grundgedanke der Erfindung besteht somit darin, die in jeder Marke enthaltenen Positionsinformationen durch jeweils eine Prüfsumme abzusichern. Diese Prüfsumme kann auf einfache Weise mit den Positionsinformationen in der Kodierung der jeweiligen Marke integriert werden, so dass das Vorsehen der Prüfsumme den konstruktiven Aufwand des Positionsmaßsystems nicht erhöht.

Ein wesentlicher Vorteil der Erfindung besteht darin, dass sowohl Fehler in den Marken des Positionsmaßsystems, beispielsweise bedingt durch Beschädigungen oder Verschmutzungen der Marken, als auch Fehler in der Auswerteeinheit des optischen Sensors durch die Erfassung der Prüfsumme der Marken aufgedeckt werden. In beiden Fällen wird die Prüfsumme einer Marke nicht erkannt. Damit sind die normativen Anforderungen für einen Einsatz der erfindungsgemäßen Vorrichtung in sicherheitsrelevanten Applikationen, das heißt im Bereich der Sicherheitstechnik erfüllt. Dies beruht darauf, dass es zur Erzielung der gemäß der relevanten Normen gestellten Sicherheitsanforderungen ausreicht, aufzudecken, ob entweder die Marken des Positionsmaßsystems defekt sind oder in der Auswertung der Marken im optischen Sensor ein Fehler vorliegt. Jedoch ist es nicht erforderlich, den aufgetretenen Fehler dahingehend zu spezifizieren, ob dieser im Bereich der Marken des Positionsmaßsystems oder im optischen Sensor selbst aufgetreten ist.

Damit werden bei der erfindungsgemäßen Vorrichtung mit einem äußerst geringen konstruktiven Aufwand die normativen Anforderungen für einen Einsatz in sicherheitsrelevanten Applikationen erfüllt. Hierzu müssen lediglich die Positionsinformationen der Marken des Positionsmaßsystems mit Prüfsummen abgesichert werden, die dann in der Auswerteeinheit des optischen Sensors erfasst werden müssen.

Besonders vorteilhaft muss hierzu der optische Sensor keinen redundanten Aufbau aufweisen. Vielmehr kann der gesamte optische Sensor einen einkanaligen Aufbau aufweisen, was nicht nur für den Sensorteil des optischen Sensors sondern auch für dessen Auswerteeinheit gilt. Der optische Sensor weist demzufolge einen sehr einfachen Aufbau auf.

Erfindungsgemäß ist in der Auswerteeinheit bei Erfassen von Fehlern in den Positionsinformationen der Marken und/oder Fehlern in der Auswerteeinheit ein Fehlersignal generiert.

Dabei weist der optische Sensor eine Schnittstelle auf, über welche das Fehlersignal ausgegeben ist.

Das Fehlersignal signalisiert eine Fehlfunktion der erfindungsgemäßen Vorrichtung, wobei das Fehlersignal an eine externe Einheit ausgegeben wird, so dass mittels dieser geeignete Gegenmaßnahmen zur Fehlerbehebung eingeleitet werden können.

Besonders vorteilhaft sind in den Marken deren Absolutpositionen innerhalb des Positionsmaßsystems kodiert.

Dabei können die Marken ein- oder zweidimensionale Barcodes sein.

Gemäß einer vorteilhaften Ausgestaltung der Erfindung wird anhand der ermittelten Positionsinformationen der Marken die jeweilige Position des optischen Sensors relativ zum Positionsmaßsystem ermittelt, so dass beispielsweise ein Fahrzeug, auf dem der optische Sensor angeordnet ist, exakt positioniert werden kann. Durch eine zeitaufgelöste Auswertung der Positionsinformationen kann alternativ oder zusätzlich die Geschwindigkeit des optischen Sensors relativ zum Positionsmaßsystem bestimmt werden.

Der für die Erfassung der Marken des Positionsmaßsystems vorgesehene eingesetzte Sensor kann allgemein ein scannender Sensor oder ein Kamerasensor sein.

Die Erfindung wird im Folgenden anhand der Zeichnungen erläutert:
- Figur 1:: Schematische Darstellung eines Ausführungsbeispiels der erfindungsgemäßen Vorrichtung mit einem optischen Sensor und einem Positionsmaßsystem
- Figur 2:: Variante des optischen Sensors für die Vorrichtung gemäß Figur 1
- Figur 3:: Darstellung der Komponenten des optischen Sensors gemäß Figur 1 beziehungsweise Figur 2 zur Signalauswertung.

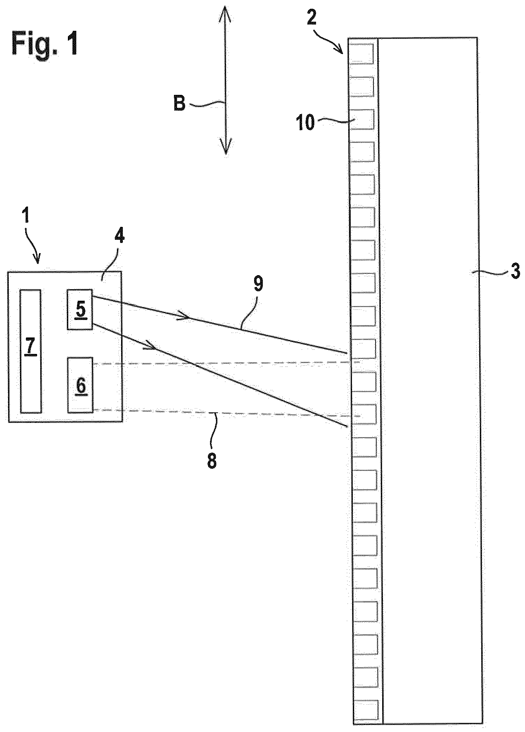

Figur 1 zeigt schematisch ein Ausführungsbeispiel der erfindungsgemäßen Vorrichtung bestehend aus einem optischen Sensor 1 und einem Positionsmaßsystem 2. Der optische Sensor 1 und/oder das Positionsmaßsystem 2 sind beweglich angeordnet, so dass diese in der mit dem Pfeil B gekennzeichneten Bewegungsrichtung gegeneinander bewegbar sind. Mit der in Figur 1 dargestellten Vorrichtung können relativ zueinander bewegbare Gegenstände positioniert werden. Im vorliegenden Fall ist ein nicht dargestelltes Fahrzeug gegenüber einem stationären Gegenstand in Form eines Regallagers 3 zu positionieren. Der optische Sensor 1 ist dabei an dem Fahrzeug montiert, während das Positionsmaßsystem 2 am Regallager 3 montiert ist.

Zur Erfassung der Fahrzeugposition relativ zum stationären Gegenstand wird das Positionsmaßsystem 2 fortlaufend mit dem optischen Sensor 1 abgetastet.

Der optische Sensor 1 gemäß Figur 1 ist in einem Gehäuse 4 integriert und weist eine Beleuchtungseinheit 5 und als Empfänger 6 eine Flächenkamera auf, die an eine gemeinsame Auswerteeinheit 7 angeschlossen sind.

Die Flächenkamera ist als CCD-Kamera, CMOS-Kamera oder dergleichen ausgebildet und weist eine flächige matrixförmige Anordnung von Empfangselementen bildenden Pixeln auf. Der optische Sensor 1 ist dabei derart am Fahrzeug montiert, dass die Flächenkamera dem Positionsmaßsystem 2 auf gleicher Höhe gegenüberliegt, so dass ein Segment des Positionsmaßsystems 2 im Sichtfeld 8 der Flächenkamera liegt.

Die im Gehäuse 4 stationär angeordnete Beleuchtungseinheit 5 emittiert Lichtstrahlen 9, mittels derer eine homogene Ausleuchtung des im Sichtfeld 8 der Flächenkamera liegenden Segments des Positionsmaßsystems 2 erfolgt. Prinzipiell kann die Beleuchtungseinheit 5 auch außerhalb des Gehäuses 4 angeordnet sein.

Die Beleuchtungseinheit 5 kann Lichtstrahlen 9 im sichtbaren oder unsichtbaren Bereich, insbesondere Infrarotbereich, emittieren.

Das Positionsmaßsystem 2 besteht aus einer Linearanordnung von äquidistant in Reihe angeordneten Marken, wobei die Marken im vorliegenden Fall als Barcodes 10 ausgebildet sind. Dabei können sowohl eindimensionale als auch zweidimensionale Barcodes 10 eingesetzt werden.

In den Marken sind als Positionsinformationen deren Absolutpositionen innerhalb des Positionsmaßsystems 2 kodiert. Durch die Erfassung der Kodierung der Marken und deren Lagen innerhalb der mit der Flächenkamera aufgenommenen Bilder kann die aktuelle Position des optischen Sensors 1 und damit des Fahrzeugs relativ zum Positionsmaßsystem 2 bestimmt werden. Durch eine zeitaufgelöste Auswertung der Positionsinformationen wird zudem die Geschwindigkeit des optischen Sensors 1 relativ zum Positionsmaßsystem 2 bestimmt. Die ermittelten Positions- und Geschwindigkeitswerte werden der Fahrzeugsteuerung zur Verfügung gestellt, so dass anhand dieser das Fahrzeug gesteuert werden kann.

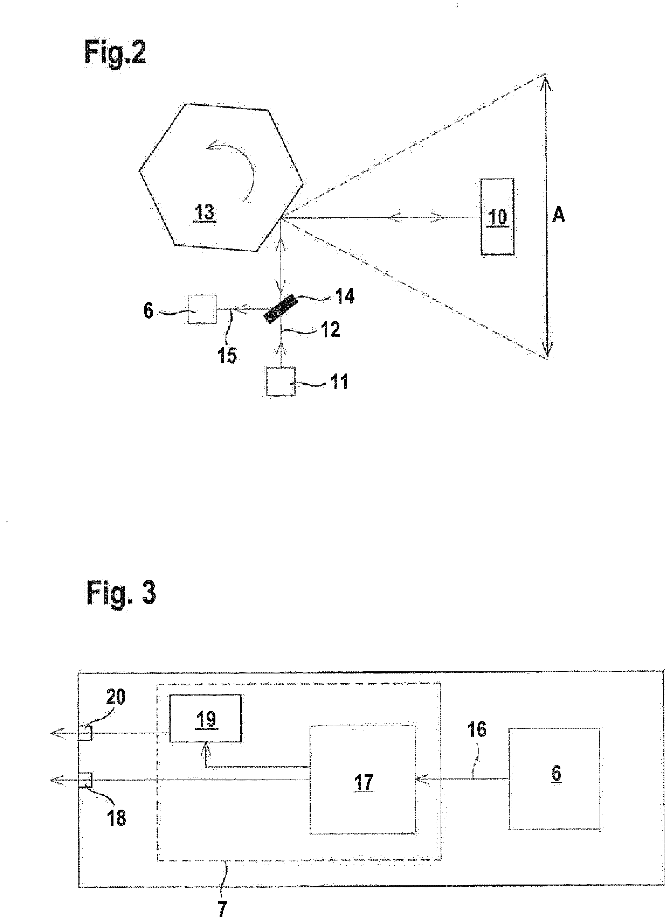

Figur 2 zeigt eine Variante des optischen Sensors 1 in Form eines scannenden Sensors. In diesem Fall werden von einem Sender 11 Sendelichtstrahlen 12 emittiert, die über eine Ablenkeinheit 13 in Form eines sich drehenden, motorisch getriebenen Polygonspiegelrads geführt und dadurch periodisch innerhalb eines Abtastbereichs A geführt sind. Die mittels eines Strahlteilers 14 koaxial zu den Sendelichtstrahlen 12 geführten Empfangslichtstrahlen 15 werden nach Reflexion an der zu erfassenden Marke über das Polygonspiegelrad zu einem Empfänger 6 geführt. Der Sender 11 kann von einer Leuchtdiode, der Empfänger 6 von einer Photodiode gebildet sein.

Zur Positionsbestimmung wird in diesem Fall die Positionsinformation einer Marke erfasst und zudem die Lage der Marke innerhalb des Abtastbereichs erfasst.

Figur 3 zeigt detailliert die Komponenten zur Signalauswertung 17 des optischen Sensors 1 der erfindungsgemäßen Vorrichtung.

Erfindungsgemäß sind in der Kodierung jeder Marke nicht nur die Positionsinformationen sondern auch eine Prüfsumme enthalten, mit der die Positionsinformationen abgesichert sind. Die bei der Erfassung einer Marke generierten empfangssignale, die über eine Zuleitung 16 in die Auswerteeinheit 7 eingelesen werden, enthalten entsprechend die Informationen der Kodierung der Marke. Die Auswerteeinheit 7 besteht im vorliegenden Fall aus einem Signalprozessor, in dem ein Analog-Digital-Wandler zum Einlesen der Empfangssignale integriert ist.

Der Signalprozessor weist, vorzugsweise in Form von ersten Softwaremodulen, eine Signalauswertung 17 aus, in der die Empfangssignale dekodiert werden. Aus der dekodierten Positionsinformation werden die Positions- und Geschwindigkeitsdaten ermittelt, die über einen analogen Ausgang 18 an die Fahrzeugsteuerung ausgegeben werden.

Die ermittelten Prüfsummen werden in einer Prüfeinheit 19, die vorzugsweise von weiteren Software-Modulen des Signalprozessors gebildet sein können, geprüft. Wird in der Prüfeinheit 19 für die gelesenen Marken jeweils die Prüfsumme korrekt erkannt, so liegt ein fehlerfreier Zustand des Gesamtsystems vor. Wird dagegen in der Prüfeinheit 19 für wenigstens eine Marke die Prüfsumme nicht oder nicht korrekt erkannt, so wird in der Prüfeinheit 19 ein Fehlersignal generiert. Dieses Fehlersignal zeigt an, dass entweder die gelesene Marke durch eine Beschädigung oder Verschmutzung fehlerhalft ist, oder dass in der Auswerteeinheit 7 selbst ein Fehler vorliegt.

Die Prüfeinheit 19 steuert einen Ausgang 20 an, über den ein binäres Ausgangssignal ausgegeben wird. Der erste Schaltzustand signalisiert den fehlerfreien Zustand. Der zweite Schaltzustand signalisiert einen Fehlerfall, das heißt er bildet das Fehlersignal.

Der Ausgang 18 und der analoge Ausgang 20 können in einer Schnittstelle zusammengefasst sein.

Das Fehlersignal wird über den Ausgang 18 einer externen Einheit, insbesondere der Fahrzeugsteuerung zur Verfügung gestellt, so dass anhand des Fehlersignals Maßnahmen zur Fehlerbeseitigung eingeleitet werden können.

Leuze electronic GmbH + Co. KG 73277 Owen/Teck

### Bezugszeichenliste

- (1): optischer Sensor
- (2): Positionsmaßsystem
- (3): Regallager
- (4): Gehäuse
- (5): Beleuchtungseinheit
- (6): Empfänger
- (7): Auswerteeinheit
- (8): Sichtfeld
- (9): Lichtstrahlen
- (10): Barcodes
- (11): Sender
- (12): Sendelichtstrahlen
- (13): Ablenkeinheit
- (14): Strahlteiler
- (15): Empfangslichtstrahlen
- (16): Zuleitung
- (17): Signalauswertung
- (18): Ausgang
- (19): Prüfeinheit
- (20): Ausgang

## Patentansprüche

1. Vorrichtung mit einem von einer Anordnung von Marken gebildeten Positionsmaßsystem (2) und mit einem optischen Sensor (1) zur Erfassung der Marken des Positionsmaßsystems (2), wobei der optische Sensor (1) und das Positionsmaßsystem (2) relativ zueinander beweglich angeordnet sind, wobei in jeder Marke Positionsinformationen und eine Prüfsumme kodiert sind, wobei eine Auswerteeinheit (7) des optischen Sensors (1) dazu eingerichtet ist, die Positionsinformationen und die Prüfsumme auszuwerten, und wobei anhand der Prüfsumme eine Fehlerkontrolle durchgeführt wird, wobei der gesamte optische Sensor (1) einen einkanaligen Aufbau aufweist, **dadurch gekennzeichnet, dass** die Funktion der Auswerteeinheit (7) überprüft wird, indem Fehler in der Auswerteeinheit (7) dadurch aufgedeckt werden, dass die Prüfsumme einer Marke nicht erkannt wird, und dass in der Auswerteeinheit (7) bei Erfassen von Fehlern in den Positionsinformationen der Marken , sowie bei Erfassen von Fehlern in der Auswerteeinheit (7) ein Fehlersignal generiert wird, wobei das Fehlersignal an eine externe Einheit ausgegeben wird, so dass mit dieser geeignete Gegenmaßnahmen zur Fehlerbehebung eingeleitet werden können.

2. Vorrichtung nach Anspruch 1, **dadurch gekennzeichnet, dass** durch Auswertung der Prüfsumme die in den Marken enthaltenen Positionsinformationen überprüft werden.

3. Vorrichtung nach Anspruch 1 oder 2, **dadurch gekennzeichnet, dass** der optische Sensor (1) eine Schnittstelle aufweist, über welche das Fehlersignal ausgegeben wird.

4. Vorrichtung nach einem der Ansprüche 1 bis 3, **dadurch gekennzeichnet, dass** in den Marken deren Absolutpositionen innerhalb des Positionsmaßsystems (2) kodiert sind.

5. Vorrichtung nach einem der Ansprüche 1 bis 4, **dadurch gekennzeichnet, dass** die Marken ein- oder zweidimensionale Barcodes (10) sind.

6. Vorrichtung nach einem der Ansprüche 1 bis 5, **dadurch gekennzeichnet, dass** anhand der in den Marken enthaltenen Positionsinformationen die Position und/oder Geschwindigkeit des optischen Sensors (1) ermittelt wird.

7. Vorrichtung nach einem der Ansprüche 1 bis 6, **dadurch gekennzeichnet, dass** der optische Sensor (1) ein scannender Sensor ist.

8. Vorrichtung nach einem der Ansprüche 1 bis 7, **dadurch gekennzeichnet, dass** der optische Sensor (1) ein Kamerasensor ist.

## Claims

1. A device comprising a positioning measuring system (2) formed by an array of marks and an optical sensor (1) for detecting the marks of the positioning measuring system (2),
wherein the optical sensor (1) and the positioning measuring system (2) are arranged to be movable relative to each other,
wherein position information and a checksum are encoded in each mark,
wherein an evaluation unit (7) of the optical sensor (1) is set up to evaluate the position information and the checksum, and
wherein an error check is carried out on the basis of the checksum,
wherein the entire optical sensor (1) has a single-channel structure,
**characterised in that** the function of the evaluation unit (7) is checked by detecting errors in the evaluation unit (7) by binding,
**in that** the checksum of a mark is not recognised, and
**in that** an error signal is generated in the evaluation unit (7) when errors are detected in the position information of the marks, as well as when errors are detected in the evaluation unit (7),
whereby the error signal is output to an external unit so that suitable countermeasures can be initiated with it to rectify the error.

2. A device according to claim 1, **characterised in that** the position information contained in the marks is checked by evaluating the checksum.

3. A device according to claim 1 or 2, **characterised in that** the optical sensor (1) has an interface via which the error signal is output.

4. A device according to one of claims 1 to 3, **characterised in that** the absolute positions of the marks within the positioning measuring system (2) are coded in the marks.

5. A device according to any one of claims 1 to 4, **characterised in that** the marks are one- or two-dimensional barcodes (10).

6. A device according to any one of claims 1 to 5, **characterised in that** the position and/or speed of the optical sensor (1) is determined on the basis of the position information contained in the marks.

7. A device according to any one of claims 1 to 6, **characterised in that** the optical sensor (1) is a scanning sensor.

8. A device according to any one of claims 1 to 7, **characterised in that** the optical sensor (1) is a camera sensor.

## Revendications

1. Dispositif comprenant un système de mesure de positionnement (2) formé par un réseau de marques et un capteur optique (1) pour détecter les marques du système de mesure de positionnement (2),
dans lequel le capteur optique (1) et le système de mesure de positionnement (2) sont disposés pour être mobiles l'un par rapport à l'autre,
dans lequel des informations de position et une somme de contrôle sont codées dans chaque marque,
dans lequel une unité d'évaluation (7) du capteur optique (1) est configurée pour évaluer les informations de position et la somme de contrôle, et
dans lequel un contrôle d'erreur est effectué sur la base de la somme de contrôle,
dans lequel l'ensemble du capteur optique (1) présente une structure à canal unique, **caractérisé en ce que** le fonctionnement de l'unité d'évaluation (7) est vérifié en détectant des erreurs dans l'unité d'évaluation (7) par liaison,
**en ce que** la somme de contrôle d'une marque n'est pas reconnue, et
**en ce qu'**un signal d'erreur est généré dans l'unité d'évaluation (7) lorsque des erreurs sont détectées dans les informations de position des marques, ainsi que lorsque des erreurs sont détectées dans l'unité d'évaluation (7),
le signal d'erreur étant transmis à une unité externe de manière à ce que des contremesures appropriées puissent être lancées avec elle pour rectifier l'erreur.

2. Dispositif selon la revendication 1, **caractérisé en ce que** l'information de position contenue dans les marques est vérifiée par l'évaluation de la somme de contrôle.

3. Dispositif selon les revendications 1 ou 2, **caractérisé en ce que** le capteur optique (1) comporte une interface par laquelle le signal d'erreur est émis.

4. Dispositif selon l'une des revendications 1 à 3, **caractérisé en ce que** les positions absolues des repères dans le système de mesure de positionnement (2) sont codées dans les repères.

5. Dispositif selon l'une quelconque des revendications 1 à 4, **caractérisé en ce que** les marques sont des codes à barres (10) unidimensionnels ou bidimensionnels.

6. Dispositif selon l'une quelconque des revendications 1 à 5, **caractérisé en ce que** la position et/ou la vitesse du capteur optique (1) est déterminée sur la base des informations de position contenues dans les marques.

7. Dispositif selon l'une quelconque des revendications 1 à 6, **caractérisé en ce que** le capteur optique (1) est un capteur à balayage.

8. Dispositif selon l'une quelconque des revendications 1 à 7, **caractérisé en ce que** le capteur optique (1) est un capteur de caméra.
